# EUROPÄISCHE PATENTSCHRIFT

(11) **EP 0 380 008 B1**
(45) Veröffentlichungstag und Bekanntmachung des Hinweises auf die Patenterteilung: **22.09.1993**
(21) Anmeldenummer: 90101152.8
(22) Anmeldetag: 20.01.1990
(51) Int. Cl.: B65D 85/57, G11B 23/027, G11B 33/04

(54) **Verpackungsbehälter für eine Mehrzahl von in Kreisform befindlichen Aufzeichnungsträgern**
Packaging container for a plurality of circular recording discs
Conditionnement pour un ensemble de supports d'enregistrement de forme circulaire

(30) Priorität: 25.01.1989 DE 8900764 U
(43) Veröffentlichungstag der Anmeldung: 01.08.1990
(73) Patentinhaber: BASF Aktiengesellschaft, 67063 Ludwigshafen (DE)
(72) Erfinder: Huebner, Dietmar, D-7602 Oberkirch (DE); Nagel, Peter, D-7608 Willstaett (DE); Hirschberg, Ekkehard, Dr., D-6940 Weinheim (DE); Schoettle, Klaus, D-6900 Heidelberg (DE); Pavelka, Bozidar, D-7608 Willstaett (DE)

(56) Entgegenhaltungen:
- DE-A- 2 312 400
- FR-A- 2 397 334
- US-A- 3 252 568
- US-A- 4 708 246

## Beschreibung

Die Erfindung betrifft einen Verpackungsbehälter für eine Mehrzahl von übereinandergestapelten, in Kreisform befindlichen Aufzeichnungsträgern, insbesondere als Bandwickel oder -spulen auf ringförmigen Wickelkernen bzw. Flanschspulen aufgewickelte bandförmige Aufzeichnungsträger, wobei zumindest einem der Aufzeichnungsträger eine Zentralhalterung zugeordnet ist, und mindestens zwei in der Draufsicht etwas größer als die Draufsichtfläche der Aufzeichnungsträger ausgebildete Boden- und Deckelteile vorgesehen sind, die mit lösbar verbindbaren Verzahnungs-Randteilen versehen sind, und wobei Boden- und Deckelteile im wesentlichen identische Verzahnungs-Randteile und eine Längsverzahnung mit einer Trennfuge um den Umfang des Behälters aufweisen.

Unter Aufzeichnungsträgern werden dabei jede Art von in Kreisform befindlichen, beispielsweise aufwickelbaren Aufzeichnungsträgern, insbesondere Magnetaufzeichnungsträger verstanden z.B. Bildfilme, Magnetfilme und Magnetbänder, sowie auch jede Art von Aufzeichnungsträgerplatten wie Compact Disks, Schallplatten, Videoplatten und Datenplatten.

Magnetbänder werden auf flanschlosen Wickelkernen oder Flanschspulen gemäß DIN 45 517 aufgewickelt in den Handel gebracht. Die Kerne oder Spulen sind auf beiden Stirnseiten flach und daher nur über zusätzliche Verriegelungsmittel arretierbar, wenn sie in Mehrzahl übereinandergestapelt sind. Zum Versand der Bandwickel dient üblicherweise eine Kartonverpackung mit schalenförmigen Kunststoff-Einsätzen. Diese Verpackung ist unwirtschaftlich und umständlich in der Handhabung. Hinsichtlich einer einfachen Abfallbeseitigung ist die Verwendung von Einsatzschalen aus Polystyrolschaum oder ähnlichen Schaummaterialien nachteilig.

Es sind mit den DE-U-8034894 und 8109502 tortenschachtelartige Verpackungen für aufgewickelte Magnetbänder oder scheibenförmige Aufzeichnungsplatten bekannt, die jedoch den Nachteil besitzen, daß Ober- und Unterteil verschiedenförmig ausgebildet und daher nur sehr aufwendig herstellbar sind.

Es ist mit der DE-A-2312400 ferner ein Transportschutz für Bildplatten bekannt, der aus einem aus zwei zusammenfügbaren Elementen gebildeter Versandbehälter besteht, wobei die Bodenflächen im Bereich der zu schützenden Informationsreliefs der Bildplatte vertieft ausgebildet sind. Der bekannte Versandbehälter ist beispielsweise mit etwa quadratischem Grundriß und etwa rechteckförmig oder schräg verlaufender Trennfuge ausgebildet. Dabei ist der Versandbehälter beispielsweise auch quer zur Wandung und längs in Umfangsrichtung mit Verzahnungen ausgebildet und die beiden Elemente können identisch ausgebildet sein. Es ist jedoch eine Vielzahl von direkten von außen in den Innenraum führenden Spalten vorhanden, so daß zwangsläufig Staub und Verunreinigungen eindringen können.

Die Anordnung der Trennfugen ist auch so getroffen, daß die Bildplatten nicht zwischen die Behälterelemente gelangen und diesen öffnen können. Da die Bildplatten nicht staubempfindlich sind, ist bei der Ausführung der Trennfugen auch keine Vorsorge in der Richtung erhöhter Staubsicherheit zu treffen.

Mit dem DE-U-8229387 ist ein Gehäuse für Kompaktkassetten mit Gehäuseverzahnungen am Umfangsrand bekannt, die jedoch die Verwindungssteifigkeit des Gehäuses vergrößern sollen. Gehäuseober- und -unterteile sind dabei verschieden, zumindest in bezug auf die Verzahnungen ausgebildet.

Mit der US-A-3 252 568 ist ein Verpackungsbehälter für Aufzeichnungsträger bekannt, mit einer Zentralhalterung sowie mit Boden- und Deckelteilen, die mit lösbar verbindbaren identischen Längsverzahnungs-Randteilen versehen sind, die sich ununterbrochen um den Umfang des Behälters erstrecken. Außerdem sind die Boden- und Deckelteile mittels Zapfen und Vertiefungen miteinander verbunden. Außer an den Stellen dieser Zapfen und Vertiefungen ergeben sich bei geschlossenem Behälter über den ganzen Umfang Spalte, die von außen direkt in den Behälterinnenraum führen und im Falle eindringender Staubpartikel und anderer Verunreinigungen Aufzeichnungs- und Wiedergabebeeinträchtigungen bewirken können.

Es ist Aufgabe der Erfindung, einen Verpackungsbehälter der eingangs definierten Art im Hinblick auf einen absoluten Staubschutz zu verbessern und wirtschaftlicher herzustellen.

Diese Aufgabe wird mit einem Verpackungsbehälter gemäß Patentanspruch 1 gelöst.

Die Verzahnungen erhöhen sowohl die Stabilität des Behälters als auch die Sicherheit gegen eindringende Staub- oder Schmutzpartikel.

Praktisch kann der Behälter eine Tortenschachtelform mit der Umrißform eines geradzahligen Vielecks, insbesondere eine Achteckform, besitzen.

Zweckmäßig kann die Höhe der größten Zahnteile der Längsverzahnung etwa der Innenhöhe des Behälters entsprechen. Dadurch werden die Aufzeichnungsträger vom Umfang her gut erfaßbar, und die Handhabung wird damit erleichtert. In vorteilhafter Ausführung sollen von der Trennfuge der Längsverzahnung höchstens wenige geradlinige Spalte in den Innenraum des Behälters führen.

Damit ist die Querverzahnung ohne Unterbrechung um den gesamten Umfang des Behälters vorgesehen oder erstreckt sich doch im wesentlichen über den Umfang.

Praktisch kann die Längsverzahnung eine sichtbare Trennfuge von Meanderform aufweisen, wodurch sich die Haftkräfte der Behälterteile vergrößern lassen. Es ist auch herstellungsmäßig günstig, wenn die Einzelzahnteile mit abgeschrägten Zahnflanken ausgebildet sind. Zur erleichterten Handhabung kann die Zentralhalterung als Zapfen mit mindestens einer axialen Griffnut ausgebildet sein.

Zweckmäßig kann dabei der Zapfen aus zwei Zapfenstumpfteilen gebildet sein, und weiter können die Zapfenstumpfteile an der Stirnfläche Verzahnungsmittel aufweisen.

Es ist auch günstig, wenn die Verzahnungsmittel aus ineinanderpassenden Kreisringsektorteilchen bestehen. Zum Transport in Senkrechtlage ist es günstig, wenn die Boden- und Deckelteile im wesentlichen ebene Außenflächen aufweisen, die höchstens flache Stapel-Vertiefungen und -Erhebungen aufweisen. In dieser Transportlage spielen die Verbindungskräfte zwischen Boden- und Deckelteilen eine besonders wichtige Rolle.

Zum übereinanderstapeln nur von Bodenteilen oder nur von Deckelteilen ist es günstig, wenn die Außenfläche des Bodenteils (Deckelteils) eine Umfangsrandnut als Stapel-Vertiefung aufweist, so daß sich eine radial innenliegende Stapel-Erhebung ergibt und die Verzahnungs-Randteile des Bodenteils (Deckelteils) Auflageflächen für die besagte Stapel-Erhebung des Bodenteils (Deckelteils) aufweisen.

Zum Stapeln der kompletten Behälter oder der Boden- und Deckelteile in beliebiger Reihenfolge können die Stapel-Vertiefungen und -Erhebungen an Boden- und Deckelteilen ineinanderpassend, insbesondere identisch ausgebildet sein.

Ausführungen der Erfindung sind in der Zeichnung dargestellt und nachfolgend beschrieben.

Die Zeichnungen zeigen:
- Figur 1: einen etwa 8-eckigen Behälter mit Meander-Trennfuge.
- Figur 2: einen ersten Schnitt durch den Deckelteil des Behälters aus Figur 1 (gemäß Schnittlinie A-A').
- Figur 3: eine zweite Schnittdarstellung durch den Bodenteil des Behälters aus Figur 1 (gemäß Schnittlinie B-B').
- Figur 4: einen 8-eckigen Behälter mit Schräg-Meander-Trennfuge.

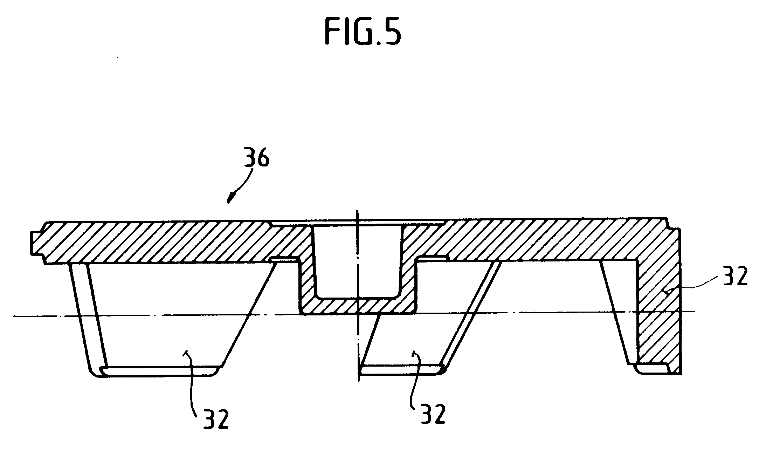

- Figur 5: eine erste Schnittdarstellung durch den Behälter aus Figur 4 (gemäß Schnittlinie C-C').

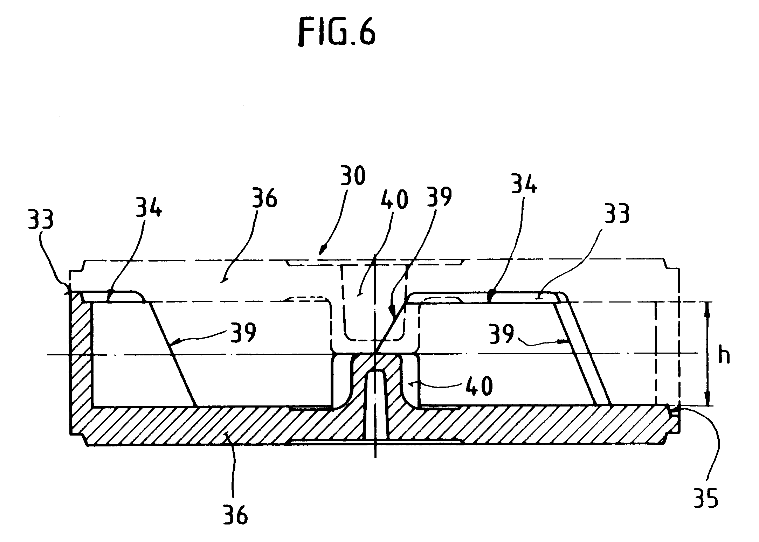

- Figur 6: eine zweite Schnittdarstellung durch den Behälter aus Figur 4 (gemäß Schnittlinie D-D').

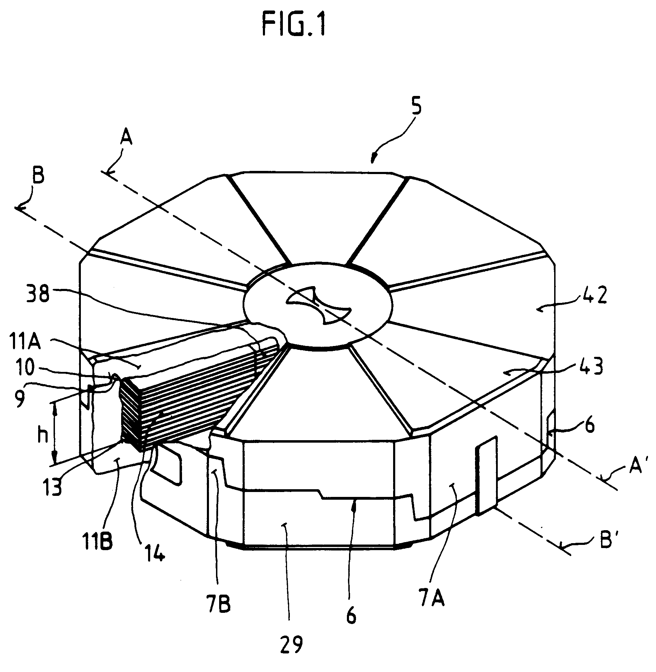

Der Behälter 5 aus Figur 1 zeichnet sich durch eine Mehrstufen-Meander-Trennfuge 6 aus, wobei die Höhe der größten Zahnteile 7A und 7B der Innenhöhe h des Behälters entspricht. Die im Sektorschnitt der Figur 1 erkennbare Querverzahnung 8 ist als Innenrand 9 am größten Zahnteil 7A oder 7B ausgebildet, der in eine entsprechende Nut 10 der jeweiligen Grundplatte 11B oder 11A des Boden- bzw. Deckelteils 12 eingreift. Im Innenraum 13 des Behälters 5 sind die Aufzeichnungsträger 14 untergebracht.

Der Behälter 5 besteht beispielsweise aus Styropor® (eingetragenes Warenzeichen der BASF Aktiengesellschaft, Ludwigshafen), kann jedoch aus jedem geeigneten Schaumkunststoff oder anderen geeigneten Werkstoffen bestehen, die sich durch Pressen, Gießen, Spritzen oder Tiefziehen verarbeiten lassen.

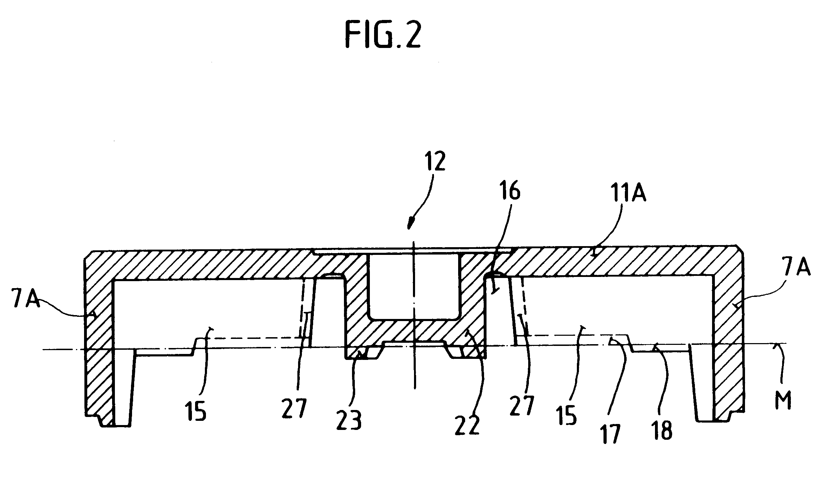

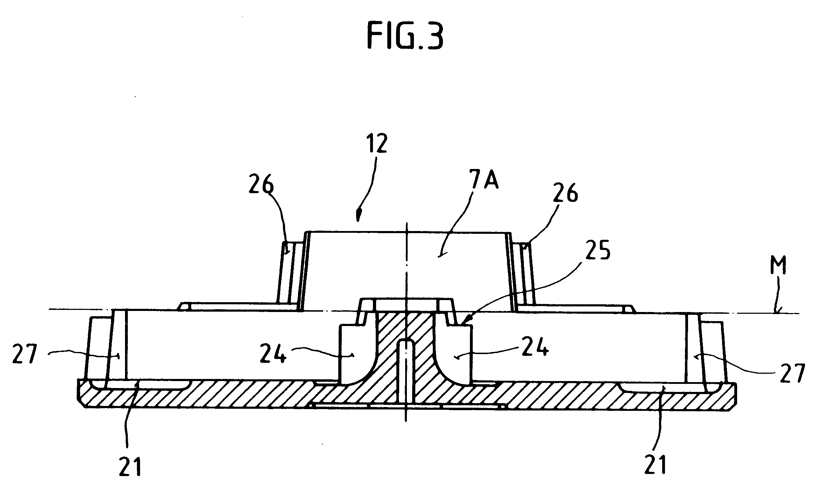

Der Deckelteil 12 in Figur 2, der wie auch die im folgenden zu beschreibenden Behälterteile zu ihrem Gegenstück identisch ausgebildet sind, wird durch die im wesentlichen ebene Grundplatte 11A gebildet, auf der die Aufzeichnungsträger 14 Plan aufliegen können, sowie durch Randteile, die einmal die größten Zahnteile 7A und zum anderen Mittelrandteile 15 umfassen, wobei zwischen diesen Mittelrandteilen die Zahn-Aussparung 16 vorgesehen ist. Die Mittelrandteile 15 reichen in der Höhe bis zur Mittelebene M des Behälters und weisen Verzahnungsrandteile 17 und 18 auf, die in Längsrichtung vorzugsweise aneinander anschließen und in der Form ineinanderpassend ausgebildet sind. Die Zahnteile 7A (7B) sind stirnseitig ebenfalls mit Verzahnungsrandteilen, hier Stegen 19 und Nuten 20, ausgebildet, wobei die Stege 19 in Sektornuten 21 (Figur 3) in Eingriff gebracht werden beim Zusammenfügen zweier Behälterteile. Aus den Verzahnungselementen der Randteile 17 bis 21 wird die Querverzahnung gebildet, die vorzugsweise über den gesamten Umfang des Behälters 5 verläuft, oder die sich doch im wesentlichen, z. B. mit kleineren unterbrochenen Abschnitten, in denen ein direkter Spalt in den Innenraum führt, um den Umfang herum erstreckt.

Eine Zentralhalterung des Behälters 5 ist als Zapfenstumpf 22 mit zwei Verzahnungs-Sektorstegen 23 an der Stirnseite ausgebildet, die sich jeder nur über einen Kreissektor von jeweils 90° erstrecken. Die Zapfenstümpfe 22 sind auch mit zwei in Figur 3 erkennbaren Griffnuten 24 ausgebildet, die jeweils zwischen den Sektorstegen 23 ausgebildet und mit Auflageflächen 25 für die Sektorstege 23 versehen sind. Das große Zahnteil 7A ist gemäß Figur 3 auch mit zwei Seitenstegen 26 ausgebildet, die zum Eingriff mit Seitennuten 27 als Mittelrandteile 15 bestimmt sind.

Beide Deckel- bzw. Bodenteile 12 sind somit identisch ausgebildet und können in derselben Form hergestellt werden. Nach dem Zusammenfügen zweier Deckelteile 12, wobei ein Teil gegenüber dem anderen um 90° gedreht und auf den Kopf gestellt werden muß, sind die Aufzeichnungsträger 14 darin sicher verwahrt. Je nach Haftwirkung der Oberfläche des verwendeten Kunststoffes kann es notwendig sein, wie Figur 1 zeigt, zum sicheren verschluß der Behälterteile 12 Klebebandstücke 28, die über die Trennfuge 6 reichen, zu verwenden, insbesondere, wenn der Behälter auch hochkant, auf einer seiner Stellflächen 29 transportiert werden soll. Ein Banderolieren des gesamten Behälters kann dafür auch vorgesehen sein. Die Boden- und Deckelteile 12 sind mit im wesentlichen ebenen Außenflächen ausgebildet, die in Figur 1 kreissektorförmige, flache Stapel-Vertiefungen 42 und -Erhöhungen 43, aufweisen.

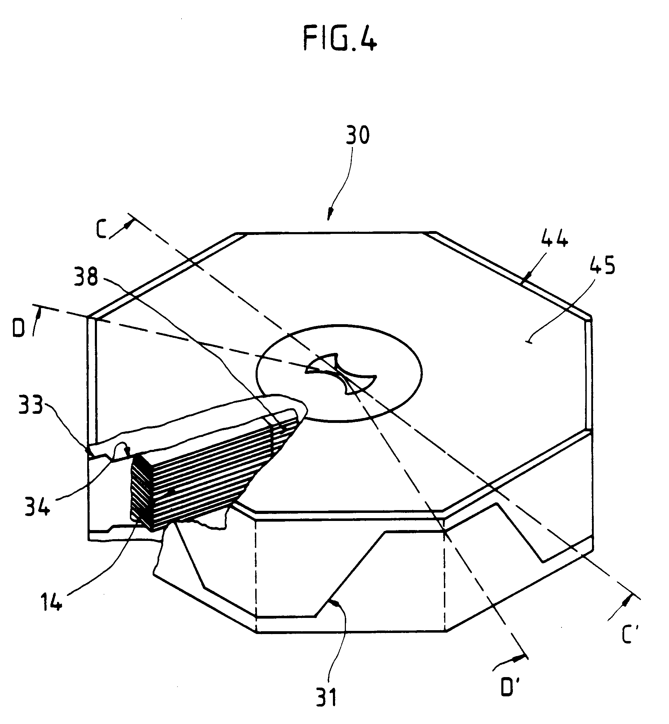

Figur 4 zeigt einen weiteren Behälter 30, der im Unterschied zur Mehrstufen-Meander-Trennfuge 6 eine Schräg-Meander-Trennfuge 31 besitzt.

Schräge, trapezförmige Zahnteile 32 sind untereinander identisch ausgebildet und jeweils symmetrisch zu jeder Ecke vorgesehen. Die Zahnteile 32 weisen stirnseitig als Randteile Außenstege 33 und Innenaussparungen 34 auf, wobei die Außenstege 33 mit den Ecknuten 35 in Eingriff kommen beim Zusammenfügen zweier Behälterteile 36. Die Grundplatte 37 ist wiederum eben ausgebildet, zur verrutschsicheren Auflage der Aufzeichnungsträger, insbesondere der freitragenden Magnetbandwickel, die auch hier auf flanschlosen Wickelkernen 38 aufgewickelt worden sind.

Im vorliegenden Behälter 30 sind die Schrägkanten 39 nicht mit Querverzahnungsmitteln ausgebildet, was jedoch ohne weiteres noch so zu ergänzen ist, daß jeweils eine Kante mit einem Steg und die andere Kante desselben Zahnteils mit einer passenden Nut ausgebildet ist.

Die Zentralhalterung 40 ist hier als Zapfenstümpfe 40A und 40B ausgebildet, zwischen denen ein Abstand vorgesehen ist. Wenn insbesondere vom Gewicht der Aufzeichnungsträger, z.B. Halbzoll-Videobandwickel und/oder vom Behälterwerkstoff im Hinblick auf einen Senkrechttransport der Behälter notwendig, können die Zapfenstümpfe entsprechend Figuren 1 bis 3 oder auf andere geeignete Weise mit stirnseitigen Verzahnungsmitteln ausgebildet sein zur Erhöhung der Stabilität des gefüllten Behälters gegen seitliches Öffnen und Auseinanderfallen des Aufzeichnungsträgerstapels. Die Zapfenstümpfe 40A und 40B sind mit axialen Griffnuten 41 ausgebildet.

In Figur 4 ist erkennbar, daß eine Umfangsnut 44 und eine sich dadurch ergebende Erhebung 45 als Stapeleinrichtungen ausgebildet sind. Die Innenaussparungen 34 sind so dimensioniert, daß zwei Deckel- oder Bodenteile 36 in gleicher Lage (Zahnteile 32 nach oben gerichtet) aufeinander stapelbar sind, wobei der Außenrand der Erhebung 45 auf die horizontalen Auflageflächen der Innenaussparung 34 zu liegen kommt.

Damit ist sehr vorteilhaft eine Verwendung der einzelnen Deckel- bzw. Bodenteile bei der Fertigung der Aufzeichnungsträger sozusagen als Produkttrag- und Schutzeinrichtung erzielbar.

Ein Verpackungsbehälter für eine Mehrzahl kreisförmig vorhandener Aufzeichnungsträger ist aus identischen Behälterteilen gebildet, die nach Zusammenfügen eine ununterbrochene Längsverzahnung in Umfangsrichtung und wenigstens eine teilweise Querverzahnung in Radialrichtung aufweisen. Verzahnungs-Randteile der Behälterteile greifen ineinander. Stapel-Einrichtungen sind vorgesehen.

Aufzeichnungsträger sind jede Art von Aufzeichnungsträgern in Kreisform wie aufgewickelte Filme, Magnetbänder oder Aufzeichnungsplatten.

## Patentansprüche

1. Verpackungsbehälter für eine Mehrzahl von übereinandergestapelten, in Kreisform befindlichen Aufzeichnungsträgern, insbesondere als Bandwickel oder -spulen auf ringförmigen Wickelkernen (38) bzw. Flanschspulen aufgewickelte bandförmige Aufzeichnungsträger (14), wobei zumindest einem der Aufzeichnungsträger eine Zentralhalterung (22) zugeordnet ist, und mindestens zwei in der Draufsicht etwas größer als die Draufsichtfläche der Aufzeichnungsträger (14) ausgebildete Boden- und Deckelteile (12, 36) vorgesehen sind, die mit lösbar verbindbaren Verzahnungs-Randteilen versehen sind, und wobei Boden- und Deckelteile (12, 36) im wesentlichen identische Verzahnungs-Randteile und eine Längsverzahnung mit einer Trennfuge (6, 31) um den Umfang des Behälters aufweisen, gekennzeichnet durch eine die Längsverzahnung bildende Vielzahl von Zahnteilen (7A, 7B, 15 bzw. 32) sowie eine Querverzahnung (17-21 bzw. 33-35), die um den Umfang in Radialrichtung des Behälters (5, 30) vorgesehen ist, so daß von der Trennfuge (6, 31) der Längsverzahnung kein geradliniger Spalt in den Innenraum des Behälters (5, 30) führt.

2. Behälter nach Anspruch 1, dadurch gekennzeichnet, daß der Behälter (5, 30) eine Tortenschachtelform mit der Umrißform eines geradzahligen Vielecks, insbesondere eine Achteckform, besitzt.

3. Behälter nach Anspruch 1 oder 2, dadurch gekennzeichnet, daß die Höhe der größten Zahnteile (7A, 7B, 32) der Längsverzahnung etwa der Innenhöhe (h) des Behälters (5, 30) entspricht.

4. Behälter nach Ansprüchen 1 bis 3, dadurch gekennzeichnet, daß die Längsverzahnung eine sichtbare Trennfuge (6, 31) von Meanderform aufweist.

5. Behälter nach Ansprüchen 1 bis 4, dadurch gekennzeichnet, daß die Einzelzahnteile (32) mit abgeschrägten Zahnflanken (39) ausgebildet sind.

6. Behälter nach Ansprüchen 1 bis 5, dadurch gekennzeichnet, daß die Zentralhalterung als Zapfen (22, 40) mit mindestens einer axialen Griffnut (24 bzw. 41) ausgebildet ist.

7. Behälter nach Anspruch 6, dadurch gekennzeichnet, daß der Zapfen aus zwei Zapfenstumpfteilen (22 bzw. 40A und 40B) gebildet ist.

8. Behälter nach Anspruch 7, dadurch gekennzeichnet, daß die Zapfenstumpfteile (22) an der Stirnfläche Verzahnungsmittel (23, 25) aufweisen.

9. Behälter nach Ansprüchen 7 und 8, dadurch gekennzeichnet, daß die Verzahnungsmittel aus ineinanderpassenden Kreisringsektorteilen (23, 25) bestehen.

10. Behälter nach Ansprüchen 1 bis 9, dadurch gekennzeichnet, daß die Boden- und Deckelteile im wesentlichen ebene Außenflächen aufweisen, die höchstens flache Stapel-Vertiefungen (42) und -Erhebungen (43) aufweisen.

11. Behälter nach Anspruch 10, dadurch gekennzeichnet, daß die Außenfläche des Bodenteils (Deckelteils) (36) eine Umfangsrandnut (44) als Stapel-Vertiefung aufweist, so daß sich eine radial innenliegende Stapel-Erhebung (45) ergibt und die Verzahnungs-Randteile (32) des Bodenteils (Deckelteils) (36) Auflageflächen (Innenaussparungen 34) für die besagte Stapel-Erhebung (45) des Bodenteils (Deckelteils) (36) aufweisen.

12. Behälter nach Anspruch 11, dadurch gekennzeichnet, daß die Stapel-Vertiefungen und -Erhebungen (42 bzw. 43) an Boden- und Deckelteilen (12) ineinanderpassend, insbesondere identisch ausgebildet sind.

## Claims

1. A packaging container for a plurality of recording media which are stacked one on top of the other and are in the form of a circle, in particular tape-like recording media (14) wound as rolls of tape on annular hubs (38) or flanged reels, a central holder (22) being assigned to at least one of the recording media, and at least two bottom and lid parts (12, 36) which, in plan view, are slightly larger than the plan view area of the recording media (14) and which are equipped with detachably connectable toothed edge parts being provided, and bottom and lid parts (12, 36) having essentially identical toothed edge parts and a longitudinal tooth system having a separation line (6, 31) around the circumference of the container, said packaging container comprising a plurality of tooth parts (7A, 7B, 15 and 32), forming the longitudinal tooth system, and a transverse tooth system (17-21 and 33-35) which is provided around the circumference in the radial direction of the container (5, 30) so that no linear gap leads into the interior of the container (5, 30) from the separation line (6, 31) of the longitudinal tooth system.

2. A container as claimed in claim 1, wherein the container (5, 30) possesses a cake box shape having the contour of an even-numbered polygon, in particular an octagonal shape.

3. A container as claimed in claim 1 or 2, wherein the height of the largest toothed parts (7A, 7B, 32) of the longitudinal tooth system corresponds roughly to the internal height (h) of the container (5, 30).

4. A container as claimed in any of claims 1 to 3, wherein the longitudinal tooth system has a visible separation line (6, 31) of zig-zag shape.

5. A container as claimed in any of claims 1 to 4, wherein the individual toothed parts (32) are provided with beveled tooth flanks (39).

6. A container as claimed in any of claims 1 to 5, wherein the central holder is in the form of a pin (22, 40) having at least one axial locking groove (24 or 41).

7. A container as claimed in claim 6, wherein the pin is formed from two pin end parts (22 or 40A and 40B).

8. A container as claimed in claim 7, wherein the pin end parts (22) have tooth means (23, 25) on the end face.

9. A container as claimed in claims 7 and 8, wherein the tooth means consist of intermeshing annular sector parts (23, 25).

10. A container as claimed in any of claims 1 to 9, wherein the bottom and lid parts have essentially flat outer surfaces which have at most shallow indentations (42) and raised stacking areas (43).

11. A container as claimed in claim 10, wherein the outer surface of the bottom part (lid part) (36) has a circumferential groove (44) as a stacking indentation, resulting in a radially inner raised stacking area (45), and the toothed edge parts (32) of the bottom part (lid part) (36) have support surfaces (inner recesses 34) for the said raised stacking area (45) of the bottom part (lid part) (36).

12. A container as claimed in claim 11, wherein the stacking indentations and raised areas (42 and 43, respectively) on bottom and lid parts (12) fit into one another, in particular are identical.

## Revendications

1. Récipient d'emballage pour une pluralité de supports d'enregistrement empilés les uns sur les autres, se présentant sous une forme circulaire, en particulier un support d'enregistrement (14) se présentant sous forme d'enroulement de ruban ou de bobine, enroulé sur des noyaux de bobine annulaires (38) ou des bobines à joues, une fixation centrale (22) étant associée à au moins l'un des supports d'enregistrement et sont prévues au moins deux parties de fond et de couvercle (12, 36), réalisées, en vue de dessus, un peu plus grandes que la surface en vue de dessus des supports d'enregistrement (14), pourvues de parties de bordure dentées susceptibles d'être reliées de façon désolidarisable, et où les parties de fond et de couvercle (12, 36) présentent, autour de la périphérie du récipient, des parties de bordure dentées sensiblement identiques et une denture longitudinale avec un joint de séparation (6, 31), caractérisé par une pluralité, formant la denture longitudinale, de parties de dent (7A, 7B, 15 ou 32) ainsi qu'une denture transversale (17 à 21, ou 33 à 35) prévues autour de la périphérie, dans la direction radiale du récipient (5, 30), de sorte qu'aucun interstice rectiligne ne parte du joint de séparation (6, 31) de la denture longitudinale, pour passer dans l'espace intérieur du récipient (5, 30).

2. Récipient selon la revendication 1, caractérisé en ce que le récipient (5, 30) présente une forme en moule à tarte, avec la forme de contour d'un polygone à nombre de côtés pairs, en particulier d'un octogone.

3. Récipient selon la revendication 1 ou 2, caractérisé en ce que la hauteur des grandes parties de dent (7A, 7B, 32) de la denture longitudinale correspond à peu près à la hauteur intérieure (h) du récipient (5, 30).

4. Récipient selon les revendications 1 à 3, caractérisé en ce que la denture longitudinale présente un joint de séparation visible (6, 31) ayant une forme en méandre.

5. Récipient selon les revendications 1 à 4, caractérisé en ce que les parties de dent individuelles (32) sont réalisées avec des flancs de dent (39) chanfreinés.

6. Récipient selon les revendications 1 à 5, caractérisé en ce que la fixation centrale est réalisée sous forme de tourillon (22, 40) avec au moins une rainure de prise axiale (24, ou 31).

7. Récipient selon la revendication 6, caractérisé en ce que le tourillon est formé de deux moignons de tourillon (22, ou 40A et 40B).

8. Récipient selon la revendication 7, caractérisé en ce que les parties de moignon de tourillon (22) présentent en face frontale un moyen de denture (23, 25).

9. Récipient selon les revendications 7 et 8, caractérisé en ce que les moyens de denture sont composés de parties de secteur d'anneau de cercle (23, 25) s'ajustant les unes dans les autres.

10. Récipient selon les revendications 1 à 9, caractérisé en ce que les parties de fond et de couvercle présentent des surfaces extérieures sensiblement planes, présentant des cavités d'empilement (42) et des bossages d'empilement (43) plans, au niveau supérieur.

11. Récipient selon la revendication 10, caractérisé en ce que la surface extérieure de la partie de fond (partie de couvercle) (36) présente une rainure de bordure périphérique (44) servant de cavité d'empilement, de sorte qu'en résulte un bossage d'empilement (45) situé intérieurement radialement, et les parties de bordure de denture (32) de la partie de fond (partie de couvercle) (36) présentent des surfaces de pose (évidements intérieurs) (34) pour ledit bossage d'empilement (45) de la partie de fond (partie de couvercle) (36).

12. Récipient selon la revendications 11, caractérisé en ce que les cavités d'empilement et les bossages d'empilement (42, ou 43) sont réalisés sur les parties de fond et de couvercle (12) en s'ajustant les uns dans les autres, en particulier en étant identiques.
